# DEMANDE DE BREVET EUROPEEN

(11) **EP 1 036 578 A1**
(43) Date de publication de la demande: **20.09.2000**
(21) Numéro de dépôt: 00420044.0
(22) Date de dépôt: 14.03.2000
(51) Int. Cl.: A63C 5/03

(54) **Véhicule du type luge**

(30) Priorité: 18.03.1999 FR 9903552
(71) Demandeur: Syndicat Mixte Pour L'Etude et L'Amenagement du Stade de Neige du Plateau de Beille, 09310 les Cabannes (FR)
(72) Inventeur: Charpentie, Lionel, 73230 Thoiry (FR)
(74) Mandataire: Palix, Stéphane

(57) **Abrégé**

Véhicule (1) du type luge, destiné à glisser sur une pente glissante comportant :
- une plate-forme (2) sur laquelle peut s'asseoir l'utilisateur;
- deux patins, respectivement un patin avant (3) et un patin arrière (4), destinés à venir au contact de la pente glissante, et disposés en dessous de la plate-forme (2), chaque patin présentant un plan de symétrie (6, 7) confondu avec le plan longitudinal médian (5) du véhicule lorsque celui-ci est au repos ;
et dans lequel, le patin avant (3) est relié à la plate-forme (2) par des moyens d'articulation (10) aptes à modifier l'angle (α) mesuré entre le plan de symétrie (6) dudit patin (3), et le plan longitudinal médian (5) du véhicule, lorsque la plate-forme (2) subit un mouvement de roulis, caractérisé en ce qu'il comporte de chaque côté de la plate-forme, à l'aplomb du patin avant, des zones de préhension (22, 23) sur lesquelles l'utilisateur peut exercer des efforts engendrant ledit mouvement de roulis.

## Description

### Domaine Technique

L'invention se rapporte au domaine des sports de glisse et plus particulièrement des sports de glisse sur neige. Elle concerne un dispositif perfectionné permettant de se déplacer sur des pentes glissantes, et apparenté à une luge.

### Techniques antérieures

Comme on le sait, une luge est un engin de glisse constitué d'un traîneau ou d'une plate-forme ou d'un habitacle présentant sur sa face inférieure une surface de glisse destinée à venir au contact de la neige, ou plus généralement d'une pente glissante.

De multiples architectures de luge ont déjà été proposées.

Ainsi, on connaît les luges épousant une forme de coque, telles que celles illustrées dans le document FR 2 655 306. Dans un tel type de luge, la coque constitue l'habitacle et le fond de cette coque forme la surface de glisse qui vient au contact de la pente glissante.De telles luges sont généralement réalisées en matière plastique et présentent l'avantage d'être légères. En revanche, elles ont le double inconvénient d'être relativement inconfortables car ne elles présentent aucune capacité d'amortissement des chocs avec les aspérités de la pente, et en outre, elles sont relativement difficiles à diriger. En effet, de telles luges comportent généralement des bras latéraux rétractables actionnables par des poignées, et qui sont mis en contact avec la neige lorsque l'utilisateur souhaite faire varier la direction de la luge. On conçoit qu'un tel mécanisme de direction est relativement rudimentaire, car il s'apparente plus précisément à un dispositif de freinage, un changement de direction impliquant obligatoirement une réduction de vitesse de progression.

On a également proposé d'équiper des coques ou des habitacles de luges de patins directionnels comme par exemple illustré dans le document FR 2 739 348. De tels patins sont orientés par un mécanisme directionnel qui peut être, par exemple, constitué par un volant orientable relié par une tringlerie à un mécanisme d'articulation permettant le changement de direction des patins.

De telles solutions sont relativement complexes mécaniquement, car nécessitent un grand nombre de pièces mécaniques pour assurer l'orientation des patins. En outre, l'actionnent du mécanisme directionnel nécessite de la part de l'utilisateur une action continue, même lorsque celui-ci souhaite glisser en ligne directe.

On connaît d'autres types d'engins permettant également de progresser sur des pentes neigeuses en glissant, et sur lesquels l'utilisateur est assis, tel que notamment celui illustré dans le document FR 2 601 920. Ce genre de véhicule repose sur un principe dérivé de celui du tricycle à neige, et s'avère particulièrement encombrant. En outre, il présente l'inconvénient d'obliger l'utilisateur à être dans une position bien définie, généralement assise, sur la luge. En outre, l'utilisation d'une paire de patins parallèles se traduit obligatoirement par le fait que le patin extérieur au virage parcourt une distance supérieure à celle du patin intérieur, et par conséquent induit un freinage qui perturbe la progression normale.

Par ailleurs, on a décrit dans les documents DE 28 00 276 et DE 28 44 408, un véhicule de déplacement sur neige constitué d'une plateforme sur laquelle peut se tenir l'utilisateur, et qui comporte deux patins articulés situés sous sa face inférieure.

Plus précisément, ces patins peuvent pivoter latéralement lorsque l'utilisateur exerce des efforts qui inclinent transversalement et latéralement la plateforme sur laquelle il se tient. Malheureusement, lorsque l'utilisateur est assis sur la plateforme de tels engins, son poids est essentiellement concentré sur l'arrière de la plateforme, et c'est le patin arrière qui reçoit la majeure partie des appuis. Il s'ensuit une forte instabilité de l'engin et une difficulté à le manoeuvrer. Cette difficulté est encore accrue par la présence de dérives disposées sous les semelles des patins de glisse.

L'objectif de l'invention est de proposer un nouveau type de luge qui permette de glisser sur les pentes de neige en étant facilement dirigeable, et qui soit simple de conception mécanique, tout en permettant d'évoluer sur des pentes glissantes ou sur de la neige dure en effectuant des virages à faible rayon de courbure.

### Exposé de l'invention

L'invention concerne donc un véhicule du type luge, destiné à glisser sur une pente glissante.

Ce véhicule comporte :
- une plate-forme sur laquelle peut s'asseoir ou s'allonger l'utilisateur ;
- deux patins, respectivement un patin avant et un patin arrière, destinés à venir au contact de la pente glissante, et disposés en dessous de la plate-forme, chaque patin présentant un plan de symétrie confondu avec le plan longitudinal médian du véhicule lorsque celui-ci est au repos.

Le patin avant est relié à la plate-forme par des moyens d'articulation aptes à modifier l'angle mesuré entre le plan de symétrie dudit patin, et le plan longitudinal médian du véhicule, lorsque la plate-forme subit un mouvement de roulis consécutif aux efforts exercés par l'utilisateur sur lesdites zones de préhension.

Le véhicule conforme à l'invention se caractérise en ce qu'il comporte des zones de préhension de chaque côté de la plateforme. Ces zones de préhension sont situées à l'aplomb du patin avant et permettent à l'utilisateur d'exercer des efforts pour engendrer le mouvement de roulis de la plateforme.

Autrement dit, la luge conforme à l'invention présente une plate-forme formant assise, sur laquelle l'utilisateur s'installe, et qu'il peut incliner d'un côté ou de l'autre en fonction des efforts de poussée ou de traction qu'il exerce sur les zones latérales avant de cette plate-forme.

Ces mouvements d'inclinaison provoqués par l'utilisateur induisent un pivotement du patin avant situé sous la plate-forme, qui s'oriente selon la trajectoire souhaitée par l'utilisateur.

De la sorte, le patin avant formant semelle de glisse tourne en direction de la trajectoire souhaitée, ce qui permet de réduire fortement le rayon de courbure de la trajectoire.

Là position avancée des zones de préhension oblige l'utilisateur à placer ses mains au niveau de ses genoux et donc à adopter une posture penchée en avant. Le poids de l'utilisateur se situe donc de façon prépondérante à l'avant, ce qui augmente la maniabilité et les capacités de contrôle du mouvement.

Avantageusement en pratique, le patin arrière est également relié à la plate-forme par des moyens d'articulation aptes à modifier l'angle formé entre le plan de symétrie dudit patin, et le plan longitudinal médian du véhicule, lorsque la plate-forme subit un mouvement de roulis consécutif aux efforts exercés par l'utilisateur sur lesdites zones de préhension.

Autrement dit, dans cette forme particulière, les deux patins s'inscrivent dans la trajectoire, ce qui augmente encore la possibilité de réduire le rayon de courbure des virages, et facilite l'enchaînement rapide des virages.

En pratique, on a remarqué qu'il est avantageux que lorsque la plate-forme subit le mouvement de roulis, l'angle que forme le plan de symétrie du patin avant avec le plan longitudinal médian du véhicule soit supérieur à l'angle que forme le plan de symétrie du patin arrière avec le plan longitudinal médian du véhicule.

Autrement dit, pour assurer une conduite optimale de l'engin, il est préférable que le patin avant pivote plus fortement que le patin arrière, pour éviter les phénomènes de survirage qui pourraient aller jusqu'à provoquer le retournement du véhicule. Cette prépondérance de l'inclinaison du patin avant par rapport à celle du patin arrière va à l'encontre de la répartition intuitive des capacités de pivotement.

Pour diminuer encore les rayons de courbure accessibles en virage, selon une forme particulière, les patins peuvent présenter une ligne de cote telle qu'ils soient plus étroits dans la partie centrale du véhicule que dans les extrémités avant et arrière.

En d'autres termes, le patin avant peut être plus étroit dans sa partie arrière que dans sa partie avant, et le patin arrière peut être plus étroit dans sa partie avant que dans sa partie arrière.

De la sorte, lorsque l'utilisateur exerce un effort important qui incline fortement la plate-forme au delà d'un certain angle, les patins se soulèvent pour n'être en contact avec la neige qu'au niveau de leurs carres.

De par la configuration concave de la ligne de cote équivalente à l'association des patins avant et arrière, il est possible d'effectuer des virages dont le rayon de courbure est inférieur à 4 m, pour un engin d'une longueur supérieure à 1 m.

Pour permettre une progression de la luge vers l'avant et vers l'arrière, les patins présentent avantageusement des extrémités avant et arrière relevées.

Avantageusement en pratique, les moyens d'articulation du patin par rapport à la plate-forme sont constitués par un mécanisme comprenant :
- un essieu orientable solidaire du patin,
- et un axe de transmission solidaire de l'essieu orientable et pivotant par rapport à la plate-forme.

Autrement dit, la plate-forme reçoit sur sa face inférieure un mécanisme fonctionnant sur le principe que les systèmes d'essieux orientables utilisés dans les planches à roulettes, et qui sont communément appelées "truck".

Avantageusement en pratique, les moyens d'articulation sont identiques pour les deux patins avant et arrière, et au moins l'un des patins comprend en outre une cale formant coin dont l'objectif est de conférer une capacité de pivotement supérieure au patin avant par rapport au patin arrière.

Pour assurer un bon amortissement des chocs relatifs à un parcours accidenté, les moyens d'articulation du patin par rapport à la plate-forme sont montés sur la plate-forme dans des zones présentant une capacité de flexion élastique par rapport à la partie de la plate-forme incluant les zones de préhension.

Autrement dit, la plate-forme présente une partie d'assise relativement rigide, et incluant latéralement les zones de préhension. Cette partie rigide se prolonge à l'avant et à l'arrière par une partie présentant une certaine liberté de mouvement élastique pour suspendre la partie d'assise de la plate-forme par rapport aux deux points d'attaches des patins.

De la sorte, lorsque la luge passe sur des obstacles ou des ruptures de pentes, la partie centrale de la plate-forme constituant l'assise se déplace verticalement relativement aux patins pour amortir ces ruptures de pentes, et assurer un confort pour l'utilisateur.

Avantageusement en pratique, les moyens de préhension sont constitués par deux poignées situées vers l'avant des côtés latéraux de la plate-forme.

Bien entendu, ces poignées peuvent être indifféremment remplacées par des évidements réalisés à l'intérieur de la plate-forme ou encore des protubérances formant excroissances latérales à la plate-forme, et de façon générale par tout moyen permettant à l'utilisateur d'exercer des efforts sur la plate-forme pour l'incliner transversalement.

Avantageusement en pratique, la plate-forme comporte deux cale-pieds disposés de part et d'autre de planches longitudinales médians des véhicules. De la sorte, il est possible d'utiliser un remonte pente tel qu'un téléski en se positionnant debout sur la plate-forme et en insérant chaque pied dans un cale-pied, pour progresser sensiblement comme sur un monoski.

Par ailleurs, dans une forme avantageuse, le patin arrière peut être également relié à la plate-forme par des moyens élastiques de rappel aptes à rapprocher l'extrémité arrière du patin vers la plate-forme.

De la sorte, lorsque l'utilisateur tombe de la plate-forme, il n'exerce donc plus son poids en direction des patins, et par conséquent le patin arrière se soulève et son extrémité avant frotte sur la surface glissante et provoque l'arrêt de la luge.

Autrement dit, cette disposition permet un freinage ou un arrêt automatique de la luge en cas de chute.

### Description sommaire des figures

La manière de réaliser l'invention ainsi que les avantages qui en découlent ressortiront bien de la description du mode de réalisation qui suit, à l'appui des figures annexées dans lesquelles :

La figure 1 est une vue en perspective sommaire de la luge conforme à l'invention vue de trois quarts dessus, sur laquelle est assis l'utilisateur.

La figure 2 est une vue en perspective sommaire de la même luge vue en trois quarts dessous.

La figure 3 est une vue de dessus de la même luge.

La figure 4 est une vue de dessus de la planche de la figure 3 lorsque la plate-forme est inclinée vers le bas du côté gauche.

La figure 5 est une vue de côté de la même luge.

La figure 6 est une vue de face de la même luge.

La figure 7 est une vue en perspective sommaire d'une luge réalisée selon une variante d'exécution.

### Manière de réaliser l'invention

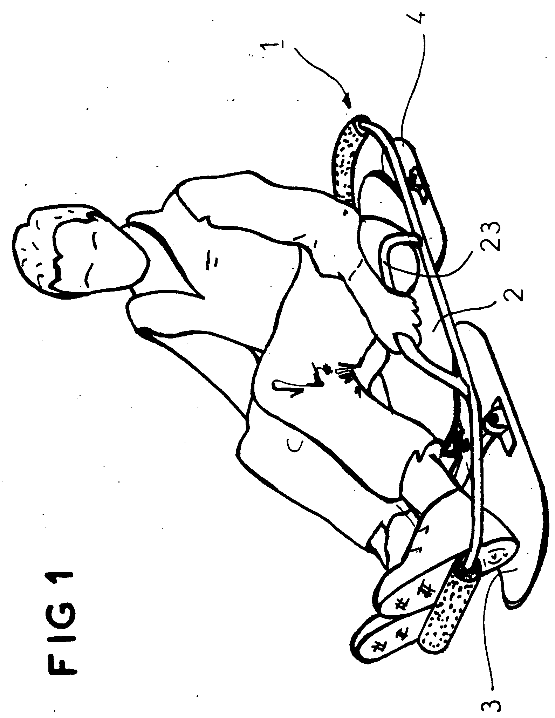

La figure 1 illustre une luge (1) conforme à l'invention, qui est essentiellement constituée d'une plate-forme (2) sur laquelle peut s'asseoir ou s'allonger, ou s'accroupir l'utilisateur, et de deux patins, respectivement un patin avant (3) et un patin arrière (4) disposés sous la plate-forme (2) et selon son plan longitudinal médian (5).

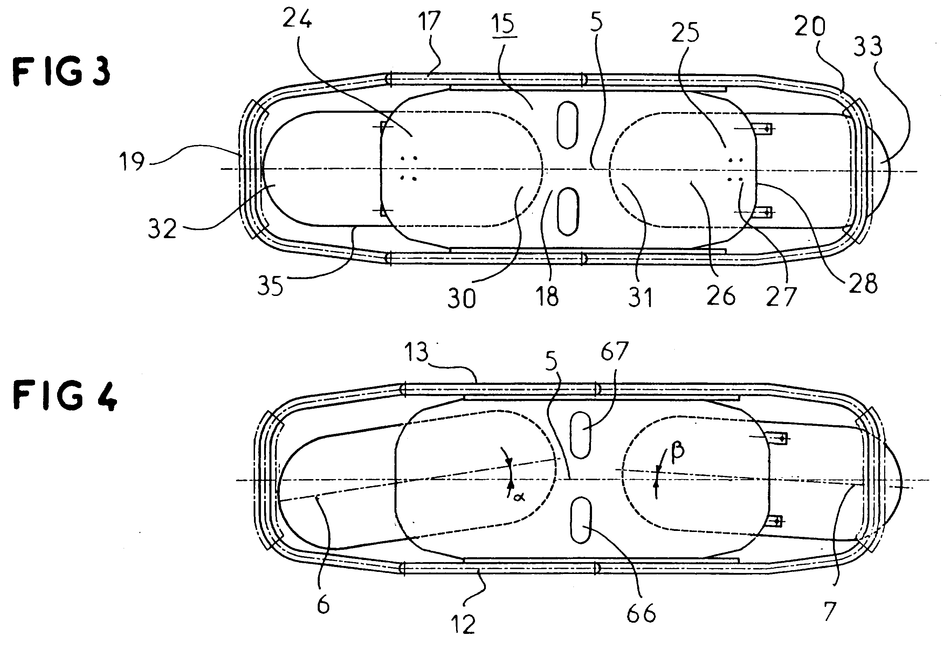

Le plan longitudinal médian (5) est matérialisé dans les vues de dessus des figures 3 et 4.

Les patins avant (3) et arrière (4) présentent eux-mêmes un plan de symétrie (6, 7) qui est confondu avec le plan longitudinal médian (5) du véhicule lorsque celui-ci est au repos, ou plus généralement lorsque la plate-forme (2) est parallèle à la pente sur laquelle glisse la luge (1).

Conformément à une caractéristique de l'invention, la luge (1) est équipée de moyens d'articulation (10) reliant les patins avant (3) et arrière (4) avec la plate-forme (2), qui sont agencés de telle sorte que, lorsque l'utilisateur exerce une pression sur un côté de la plate-forme (2), pour que la plate-forme s'incline et qu'un de ses côtés se rapproche du sol par rapport au côté opposé, au moins le patin avant (3) et préférentiellement le patin avant (3) et le patin arrière (4) s'orientent pour s'inscrire dans la trajectoire.

Ainsi, comme illustré à la figure 4, lorsque l'utilisateur exerce une poussée vers le bas du côté gauche (12) de la plate-forme (2), ou qu'il exerce une traction sur le côté droit (13) de la même plate-forme, le patin avant (3) pivote vers la gauche, tandis que le patin arrière (4) pivote vers la droite.

Il s'ensuit que la luge suit une trajectoire orientée vers la gauche.

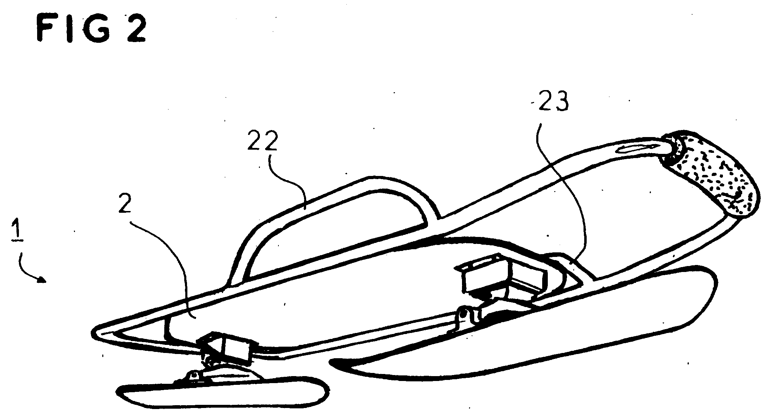

Comme illustré aux figures 1 et 2, la plate-forme (2) de la luge est constituée par une surface plane ou quasi plane réalisée en un matériau présentant certaines capacités de souplesse tout en étant résistant, tel que le bois contre-plaqué multiplis ou une matière plastique ou bien encore un stratifié de verre enduit.

Dans les figures illustrées, la plaque rigide (15) de la plate-forme (2) est entourée par un ensemble de tubulures (17) qui d'une part, participent à la rigidité globale de la plate-forme dans la partie centrale (18) servant d'assise, et d'autre part, se prolongent vers l'avant pour réaliser un repose-pied (19).

Sur la forme illustrée aux figures 1 et 2, cette tubulure se prolonge également vers l'arrière pour constituer un dossier (20) abaissé qui, a également pour fonction, de faciliter le portage de la luge.

Comme on le voit à la figure 1, la plate-forme (2) comporte, plutôt en partie avant, deux tubulures supplémentaires (22, 23) formant poignées, ou zones de préhension. Bien évidemment, ces poignées (22, 23) pourraient être remplacées par des échancrures (non représentées) réalisées dans la plate-forme (2) elle-même de façon à permettre à l'utilisateur d'y passer les mains pour permettre une bonne préhension de la planche.

Les formes des différentes tubulures (17, 19, 20) des extrémités de la plate-forme sont étudiées pour présenter un profil arrondi et éviter les angles aigus blessants.

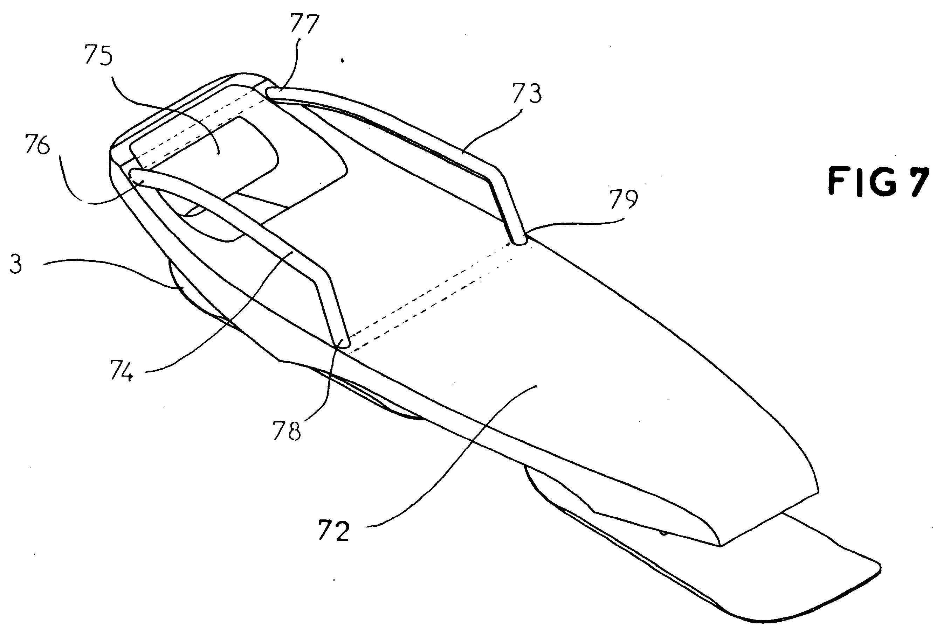

Comme illustré à la figure 7, montrant une variante d'exécution, la plateforme (72) peut se prolonger jusqu'à l'extrémité avant de la luge, et présenter une ouverture (75) dans laquelle l'utilisateur repose ses pieds. Les tubulures (73, 74), situées à l'aplomb du patin avant, peuvent avantageusement être reliées entre elles transversalement au niveau de leurs extrémités avants (76, 77) ainsi qu'au niveau de leurs extrémités arrières (78, 79) à travers la plateforme elle-même. Dans ce cas, cet ensemble de tubulures longitudinales (73, 74) et transversales forment une structure robuste conférant la rigidité souhaitée pour la partie avant de la plateforme (72).

Les patins (3, 4) sont reliés à la plate-forme (2) par des moyens d'articulation (10) dont la fonction essentielle est d'assurer un pivotement des patins (3, 4) dans leur plan, lorsque la plate-forme (2) s'incline latéralement.

Selon une autre caractéristique de l'invention, ces moyens d'articulation (10) sont solidaires de la plate-forme (2) dans des zones (24, 25) présentant une capacité de flexion élastique par rapport à la partie (18) de la plate-forme incluant les zones de préhension (22, 23).

Plus précisément, comme illustré aux figures 1 à 3, ces moyens d'articulation (10) sont vissés sur la plate-forme (2) dans des zones (24, 25) formant un prolongement de la partie centrale (18) de la plate-forme (2) sur laquelle vient s'asseoir l'utilisateur.

Ces zones (24, 25) présentant des capacités de flexion peuvent être constituées par des parties sensiblement trapézoïdales (25) dont la grande base (26) constitue la limite de la zone d'assise (18) de la plate-forme (2). Le point d'ancrage (27) des moyens d'articulation (10) est alors situé à proximité de la petite base (28) de cette partie sensiblement trapézoïdale (25).

Cette partie trapézoïdale (25) présente une capacité de flexion vis à vis de la partie centrale (18) de la plate-forme (2), grâce à sa section rétrécie. Dans les formes illustrées aux figures 1 et 3, la rigidité de la partie d'assise (18) de la plate-forme est renforcée par la présence de tubulures métalliques (17).

La capacité de flexion de la partie de la plate-forme sur laquelle sont ancrés les moyens d'articulation, peut également être assurée par l'utilisation d'une pièce (24) plus souple, distincte de l'assise (18), par exemple reliée à la tubulure avant (19) formant repose-pied.

Les patins (3, 4) présentent, selon une autre caractéristique de l'invention, un profil particulier assurant une meilleure inscription dans la trajectoire, et permettant de réduire de façon importante les rayons de courbure des virages.

Ainsi, comme on le voit à la figure 3, les patins avant (3) et arrière (4) présentent des lignes de cote telles que les extrémités (30, 31) des patins en regard l'une de l'autre, sont plus étroites que les extrémités opposées (32, 33).

Autrement dit, le patin avant (3) présente une zone avant (32) plus large que sa zone arrière (30), et inversement, le patin (4) présente une zone arrière (33) plus large que sa zone avant (31).

De la sorte, lorsqu'un virage est déclenché, la direction de la carre intérieure (35) du patin avant (3) est orientée plus à l'intérieur du virage que le plan de symétrie (6) du patin (3) lui-même.

Il en va de même pour le patin arrière (4), de sorte que le rayon de courbure du virage est extrêmement réduit, et est typiquement de l'ordre de 3 à 4 m pour une luge de l'ordre d'1 m à 1,50 m de long.

Selon une autre caractéristique de l'invention, la capacité de pivotement du patin avant (3) est supérieure à la capacité de pivotement du patin arrière (4) pour une même inclinaison de la plate-forme (2).

En effet, pour éviter les phénomènes de survirage, on a déterminé qu'il est important que l'utilisateur exerce ses appuis préférentiellement à l'avant de la plate-forme (2), de sorte qu'il est préférable que le patin arrière (4) pivote d'un angle moindre que le patin avant.

Typiquement, pour une inclinaison de 10° de la plate-forme (2) par rapport à sa position de repos, le patin avant pivote par rapport au plan de symétrie du véhicule d'un angle (α) compris entre 5 et 15° et voisin de 10°, alors que le patin arrière (4) pivote d'un angle (β) compris entre 2 et 8° et voisin de 5°. Au delà de ces valeurs d'angle, les patins se mettent en prise de carre.

Plus précisément, les moyens d'articulation (10) sont constitués par un mécanisme comprenant :
- un essieu orientable (40) solidaire du patin (3), et pivotant par rapport à la plate-forme (2) ;
- et un axe de transmission solidaire de la plate-forme, et pivotant par rapport à l'essieu orientable.

Ce genre de mécanisme correspond notamment à ceux utilisés sur les planches à roulettes, et généralement dénommés "trucks". On a obtenu de bons résultats en utilisant des "trucks" du modèle G*TRUCK CONTROL commercialisés par la société DEALER SPORT PRODUCTS GmbH.

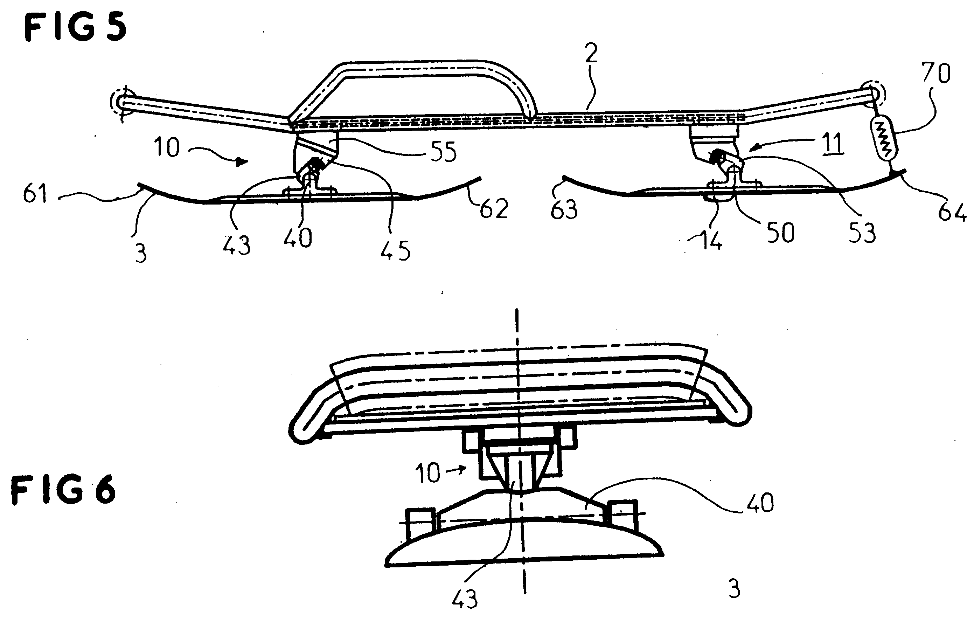

Comme on le voit aux figures 5 et 6, l'essieu orientable (40) est disposé transversalement par rapport au patin (3), et est relié à un bras principal (43) orienté en direction de la plate-forme (2), et dont l'extrémité supérieure est apte à pivoter dans une chape (45) prévue à cet effet, et solidaire de la plate-forme (2).

La capacité de pivotement des patins (3, 4), par rapport à la plate-forme (2), est principalement déterminée par l'orientation du bras principal (43) par rapport au plan formant la surface inférieure de la plate-forme (2). Ainsi, pour obtenir des orientations différentes entre le patin avant (3) et le patin arrière (4), on donne à l'orientation des bras (43, 53) des mécanismes des patins avant (3) et arrière (4) des valeurs différentes.

Pour utiliser des mécanismes identiques (10) pour les patins avant (3) et arrière (4), on modifie l'orientation du bras (43) du patin avant (3) grâce à une cale (55) interposée entre le mécanisme (10) proprement dit et le dessous de la plate-forme (2).

Cette cale (55) présente deux faces principales formant un angle qui vient s'ajouter à l'angle du bras (43), donnant par là-même des orientations différentes aux bras (43, 53) des mécanismes avant (10) et arrière (11).

Bien entendu, en fonction des mécanismes utilisés, il peut être intéressant de disposer une cale au niveau du patin arrière pour rapprocher de l'horizontale le bras principal (53) du mécanisme arrière (11).

En pratique, avec des "trucks" du modèle particulier précité, la différence de comportement en pivotement des patins avant (3) et arrière (4), est satisfaisante en utilisant une cale (55) au niveau du patin avant présentant un angle compris entre 5 et 15°, et avantageusement de 11°, et une cale (56) au niveau du patin arrière dont l'angle est compris entre 0 et 10°, et avantageusement voisin de 5°.

Selon une autre caractéristique de l'invention, les patins avant (3) et arrière (4) présentent des extrémités (61, 62, 63, 64) relevées, ce qui permet la progression de la luge dans les deux sens, multipliant ainsi les possibilités d'utilisation.

Suivant une autre caractéristique de l'invention, la plate-forme (2) présente deux cale-pieds (66, 67) situés sensiblement au niveau médian de la plate-forme, et de part et d'autre du plan longitudinal médian (5), et qui permettent, lorsque l'utilisateur est positionné debout sur la luge, d'utiliser les remonte-pentes du type téléski.

Il ressort de ce qui précède que la luge conforme à l'invention présente de multiples avantages, notamment :
- la possibilité de réaliser des virages dont le rayon de courbure est très faible ;
- l'amortissement des chocs consécutifs au passage de la luge sur des ruptures de pente ;
- la légèreté et la simplicité de construction mécanique, la robustesse ;
- la multiplicité des positions que peut occuper l'utilisateur sur l'engin, à savoir la position assise, couchée, sur le ventre ou sur le dos, voire éventuellement accroupi ;
- la facilité de rangement, notamment par empilement ;
- la capacité d'auto-freinage lorsque l'utilisateur chute.

## Revendications

1. Véhicule (1) du type luge, destiné à glisser sur une pente glissante comportant :
- une plate-forme (2) sur laquelle peut s'asseoir l'utilisateur ;
- deux patins, respectivement un patin avant (3) et un patin arrière (4), destinés à venir au contact de la pente glissante, et disposés en dessous de la plate-forme (2), chaque patin présentant un plan de symétrie (6, 7) confondu avec le plan longitudinal médian (5) du véhicule lorsque celui-ci est au repos ;
et dans lequel, le patin avant (3) est relié à la plate-forme (2) par des moyens d'articulation (10) aptes à modifier l'angle (α) mesuré entre le plan de symétrie (6) dudit patin (3), et le plan longitudinal médian (5) du véhicule, lorsque la plate-forme (2) subit un mouvement de roulis, caractérisé en ce qu'il comporte de chaque côté de la plate-forme, à l'aplomb du patin avant, des zones de préhension (22, 23) sur lesquelles l'utilisateur peut exercer des efforts engendrant ledit mouvement de roulis.

2. Véhicule selon la revendication 1, caractérisé en ce que le patin arrière (4) est relié à la plate-forme (2) par des moyens d'articulation (11) aptes à modifier l'angle (β) formé entre le plan de symétrie (7) dudit patin (4), et le plan longitudinal médian (5) du véhicule, lorsque la plate-forme (2) subit un mouvement de roulis consécutif aux efforts exercés par l'utilisateur sur lesdites zones de préhension (22, 23).

3. Véhicule selon les revendications 1 et 2, caractérisé en ce que lorsque la plate-forme (2) subit un mouvement de roulis, l'angle (α) que forme le plan de symétrie (6) du patin avant (3) avec le plan longitudinal médian (5) du véhicule est supérieur à l'angle (β) que forme le plan de symétrie (7) du patin arrière (4) avec le plan longitudinal médian (5) du véhicule.

4. Véhicule selon l'une des revendications 1 à 3, caractérisé en ce que le patin avant (3) est plus étroit dans sa partie arrière (30) que dans sa partie avant (32).

5. Véhicule selon l'une des revendications 1 à 4, caractérisé en ce que le patin (4) arrière est plus étroit dans sa partie (31) avant que dans sa partie arrière (33).

6. Véhicule selon l'une des revendications 1 à 5, caractérisé en ce que le patin arrière (4) comporte un élément (14) en excroissance disposé sur sa face destinée à venir au contact de la surface glissante.

7. Véhicule selon l'une des revendications 1 à 6, caractérisé en ce que les patins (3, 4) présentent des extrémités avant (61, 63) et arrière (62, 64) relevées.

8. Véhicule selon les revendications 1 à 7, caractérisé en ce que les moyens d'articulation (10, 11) sont constitués par un mécanisme comprenant :
- un essieu orientable (40, 50) solidaire du patin, et pivotant par rapport à la plate-forme ;
- et un axe de transmission solidaire de la plate-forme et pivotant par rapport à l'essieu orientable (40, 41).

9. Véhicule selon la revendication 8, caractérisé en ce que les mécanismes (10, 11) des moyens d'articulation sont identiques pour les deux patins (3, 4), et en ce qu'au moins un patin comprend en outre une cale (55) formant coin interposé entre la plate-forme et les moyens d'articulation.

10. Véhicule selon les revendications 1 à 9, caractérisé en ce que les moyens d'articulation (10, 11) sont montés sur la plate-forme (2) dans des zones (24, 25) présentant des capacités de flexion élastique par rapport à la partie (18) de la plate-forme incluant les zones de préhension (22, 23).

11. Véhicule selon l'une des revendications 1 à 10, caractérisé en ce que les moyens de préhension sont constitués par deux poignées (22, 23) situées vers l'avant des côtés latéraux de la plate-forme (2).

12. Véhicule selon l'une des revendications 1 à 11, caractérisé en ce que la plate-forme (2) comporte deux cale-pieds disposés (66, 67) de part et d'autre du plan longitudinal médian (5) du véhicule.

13. Véhicule selon l'une des revendications 1 à 12, caractérisé en ce que le patin arrière (4) est également relié à la plate-forme par des moyens élastiques de rappel (70) aptes à rapprocher l'extrémité arrière (64) du patin arrière (4) vers la plate-forme (2).
